# EUROPÄISCHE PATENTSCHRIFT

(11) **EP 2 807 812 B1**
(45) Veröffentlichungstag und Bekanntmachung des Hinweises auf die Patenterteilung: **02.09.2015**
(21) Anmeldenummer: 13715993.5
(22) Anmeldetag: 15.04.2013
(51) Int. Cl.: H04L 29/08, G06F 17/30

(54) **VERFAHREN UND SYSTEM ZUR SYNCHRONISATION VON PROGRAMMMASKEN**
METHOD AND SYSTEM FOR SYNCHRONIZING PROGRAM MASKS
PROCÉDÉ ET SYSTÈME DE SYNCHRONISATION DE MASQUES DE PROGRAMMES

(43) Veröffentlichungstag der Anmeldung: 03.12.2014
(73) Patentinhaber: Himmelsbach Computer GmbH, 77960 Seelbach (DE)
(72) Erfinder: HIMMELSBACH, Markus, 77960 Seelbach (DE)
(74) Vertreter: 2s | ip Schramm Schneider Patentanwälte Rechtsanwälte
(86) Internationale Anmeldenummer: PCT/EP2013/057791
(87) Internationale Veröffentlichungsnummer: WO 2014/169938

(56) Entgegenhaltungen:
- US-A1- 2002 029 245
- US-A1- 2005 097 159
- US-A1- 2005 138 122
- US-A1- 2008 228 927
- US-A1- 2009 164 581

## Beschreibung

### Gebiet der Erfindung

Die Erfindung betrifft ein Verfahren zur Synchronisation von Programmmasken in einem System mit zumindest einer Servereinrichtung und zumindest einer ersten Clienteinrichtung und einer zweiten Clienteinrichtung, wobei die Clienteinrichtungen mit der Servereinrichtung koppelbar sind, und wobei die Synchronisation der Programmmasken sowohl offline als auch online möglich ist. Ferner betrifft die Erfindung ein System, insbesondere Datenverarbeitungseinrichtung, die angepasst ist, das erfindungsgemäße Verfahren zur Synchronisation von Programmmasken auszuführen.

### Stand der Technik und Hintergrund der Erfindung

Computerprogramme, Websites oder andere Softwareprodukte werden durch technische Weiterentwicklungen zunehmend komplexer und umfangreicher. Je komplexer und umfangreicher die Computerprogramme bzw. Websites werden, umso schwieriger wird es, etwa im Rahmen eines Supports in effizienter Weise an eine definierte Stelle (etwa eine Eingabemaske eines Computerprogramms oder eine spezifische Internetseite einer Website) des Computerprogramms oder der Website zu gelangen. Dies ist beispielsweise im Rahmen eines Supportprozesses notwendig, damit zwei oder mehr räumlich voneinander getrennte Personen (etwa ein Supportmitarbeiter und ein Kunde) sich über den gleichen Bildschirminhalt (Eingabemaske eines Computerprogramms bzw. Internetseite einer Website) unterhalten bzw. austauschen wollen. Ein Problem besteht hierbei darin, dass gewährleistet werden muss, dass sowohl der Supportmitarbeiter als auch der Kunde die gleiche Eingabemaske bzw. Internetseite sehen.

Ein weiteres Problem, insbesondere im Rahmen eines Supportprozesses, besteht darin, dass die bei dem Kunden angezeigte Eingabemaske bzw. Webseite durch den Supportmitarbeiter nicht angepasst bzw. verändert werden kann, um den Kunden etwa auf für ihn relevante Informationen in der Eingabemaske bzw. Webseite hinzuweisen oder bestimmte Informationen in der Eingabemaske bzw. Webseite für den Kunden anzupassen bzw. zu verändern, ohne dass eine solche Änderung Auswirkungen auf die Anzeige der selben Eingabemaske bzw. Webseite bei anderen Kunden hat. So kann beispielsweise der Preis eines auf einer Webseite angezeigten Produktes für einen bestimmten Kunden, der diese Webseite betrachtet, nicht angepasst, etwa reduziert werden.

Aus dem Stand der Technik ist es bekannt, einem Supportmitarbeiter Zugriff auf das entfernte System des Kunden zu gewähren, etwa durch Einsatz einer Remote-Control-Software. Diese Lösung hat allerdings mehrere Nachteile.

Zunächst ist es notwendig, dass auf dem System des Kunden eine Client-Software installiert ist, die es dem Supportmitarbeiter ermöglicht auf das System des Kunden zuzugreifen. Rechtliche Restriktionen, etwa Firmenpolicies können allerdings verhindern, dass der Kunde auf seinem System eine solche Client-Software installieren darf

Doch selbst wenn der Kunde eine solche Client-Software installiert hat, können technische Einschränkungen dazu führen, dass der Supportmitarbeiter nicht auf das System des Kunden zugreifen kann, etwa wenn eine Firewall des Unternehmens einen Remote-Zugriff verhindert. Der Einsatz derartiger Remote-Control-Software ist damit zeitintensiv und fehleranfällig. Insbesondere wenn nur sehr selten ein Support benötigt wird, kann der Einsatz einer solchen Remote-Control-Software einen erheblichen Kostenfaktor darstellen, der einen solchen Einsatz wirtschaftlich unrentabel macht.

Die Druckschriften S2005/0097159, US2002/0029245 und S2008/0228927 beschreiben Verfahren zur Synchronisierung von Webseiten die gleichzeitig an mehreren Glienteinrichtungen angezeigt werden.

### Aufgabe der Erfindung

Aufgabe der Erfindung ist es daher, Lösungen bereitzustellen, mit denen auf einfache Weise, effizient und weitgehend fehlerunanfällig gewährleistet werden kann, dass zwei oder mehr räumlich voneinander getrennte Personen die selbe Programmmaske eines Computerprogramms bzw. die selbe Internetseite einer Website sehen, ohne dass hierfür auf einem entfernten Computer zusätzliche Software installiert werden muss, und die es ermöglichen, die angezeigte Eingabemaske eines Computerprogramms bzw. die angezeigte Internetseite einer Website für einen bestimmten Benutzer anzupassen bzw. zu verändern, ohne dass die Änderungen für andere Benutzer des Computerprogramms bzw. der Internetseite sichtbar werden.

### Erfindungsgemäße Lösung

Diese Aufgabe wird erfindungsgemäß durch Verfahren zur Synchronisation von Programmmasken, einer Servereinrichtung sowie ein Computerprogrammprodukt gemäß den unabhängigen Ansprüchen gelöst. Vorteilhafte Ausgestaltungen und Weiterbildungen der Erfindung sind in den abhängigen Ansprüchen angegeben.

Bereitgestellt wird demnach ein Verfahren zur Synchronisation von Programmmasken in einem System umfassend zumindest eine Servereinrichtung und zumindest eine erste Clienteinrichtung und eine zweite Clienteinrichtung, wobei die Clienteinrichtungen mit der zumindest einen Servereinrichtung koppelbar sind, und wobei das Verfahren die Schritte des Anspruchs 1 umfasst.

Vorzugsweise umfasst das Ermitteln der ersten eindeutigen Kennung:
- Erzeugen der ersten eindeutigen Kennung für die angeforderte erste Programmmaske; und
- Speichern der ersten eindeutigen Kennung in einer Speichereinrichtung.

Vorteilhaft ist es, wenn beim Ermitteln der ersten Programmmaske die der entgegengenommenen ersten eindeutigen Kennung in der Speichereinrichtung zugeordnete erste Programmmaske in der Speichereinrichtung abgefragt wird und als Ergebnis der Abfrage Informationen über die erste Programmmaske von der Speichereinrichtung entgegengenommen werden.

Die mit der zweiten Anfragenachricht von der zweiten Clienteinrichtung entgegengenommene erste eindeutige Kennung kann von der ersten Clienteinrichtung an die zweite Clienteinrichtung übermittelt worden sein.

Bereitgestellt wird auch ein Verfahren zur Synchronisation von Programmmasken in einem System umfassend zumindest eine Servereinrichtung und zumindest eine erste Clienteinrichtung und eine zweite Clienteinrichtung, wobei die Clienteinrichtungen mit der zumindest einen Servereinrichtung koppelbar sind, und wobei das Verfahren folgende Schritte umfasst:
- Entgegennehmen einer dritten Anfragenachricht von der zweiten Clienteinrichtung, wobei mit der dritten Anfragenachricht eine zweite Programmmaske angefordert wird;
- Ermitteln einer zweiten eindeutigen Kennung für die angeforderte zweite Programmmaske;
- Übertragen der angeforderten zweiten Programmmaske und der zweiten eindeutigen Kennung an die zweite Clienteinrichtung;
- Entgegennehmen einer vierten Anfragenachricht von der ersten Clienteinrichtung, wobei die vierte Anfragenachricht zumindest die zweite eindeutige Kennung umfasst;
- Ermitteln der zweiten Programmmaske, die der entgegengenommenen zweiten eindeutigen Kennung zugeordnet ist; und
- Übertragen der ermittelten zweiten Programmmaske an die erste Clienteinrichtung.

Das Ermitteln der zweiten eindeutigen Kennung kann umfassen:
- Erzeugen der zweiten eindeutigen Kennung für die angeforderte zweite Programmmaske; und
- Speichern der zweiten eindeutigen Kennung in einer Speichereinrichtung, wobei die zweite eindeutige Kennung der angeforderten zweiten Programmmaske zugeordnet wird.

Vorteilhaft ist es, wenn beim Ermitteln der zweiten Programmmaske die der entgegengenommenen zweiten eindeutigen Kennung in der Speichereinrichtung zugeordnete zweite Programmmaske in der Speichereinrichtung abgefragt wird und als Ergebnis der Abfrage Informationen über die zweite Programmmaske von der Speichereinrichtung entgegengenommen werden.

Die mit der vierten Anfragenachricht von der ersten Clienteinrichtung entgegengenommene zweite eindeutige Kennung kann von der zweiten Clienteinrichtung an die erste Clienteinrichtung übermittelt worden sein.

In dem zuletzt genannten Verfahren können ferner die Schritte des zuerst genannten Verfahrens ausgeführt werden.

In den erfindungsgemäßen Verfahren können die Schritte serverseitig ausgeführt werden.

In den erfindungsgemäßen Verfahren kann die Servereinrichtung von der zweiten Clienteinrichtung eine Aktualisierungsnachricht entgegennehmen, die Informationen darüber umfasst, welche Teile der an die erste Clienteinrichtung übertragenen ersten bzw. zweiten Programmmaske, die eine Anzahl von Teilen umfasst, wie zu aktualisieren sind.

In den erfindungsgemäßen Verfahren kann die Servereinrichtung die empfangene Aktualisierungsnachricht in der Speichereinrichtung speichern und der ersten bzw. zweiten eindeutigen Kennung zuordnen.

Vorteilhaft ist es, wenn die Servereinrichtung die Aktualisierungsnachricht zur Übertragung an die erste Clienteinrichtung bereitstellt, um an der ersten Clienteinrichtung eine Aktualisierung der übertragenen ersten bzw. zweiten Programmmaske gemäß der in der Aktualisierungsnachricht enthaltenen Informationen zu veranlassen.

Die Servereinrichtung kann bei Beendigung des Verfahrens ein Löschen der in der Speichereinrichtung gespeicherten ersten bzw. zweiten eindeutigen Kennung veranlassen.

In einem ersten Schritt kann eine Sitzung (Session) für die erste Clienteinrichtung gestartet werden und in einem letzten Schritt die Sitzung beendet werden.

Vorzugsweise ist die erste Clienteinrichtung durch eine eindeutige Clientkennung identifizierbar, wobei die erste und/oder die zweite eindeutige Kennung der Clientkennung zugeordnet werden und die Zuordnungen in der Speichereinrichtung gespeichert werden.

In einem letzten Schritt können die Sitzung beendet werden und die der Clientkennung zugeordneten eindeutigen Kennungen in der Speichereinrichtung gelöscht werden.

Als vorteilhaft hat sich herausgestellt, wenn die eindeutige Clientkennung eines aus IP-Adresse, MAC-Adresse, Browser-Kennung, Softwarelizenz-Nummer, Hardware-Seriennummer, eMail-Adresse, Telefonnummer, EAN-Code, und eindeutiges biometrisches Merkmal, umfasst. Die Telefonnummer kann mit oder ohne eine Vorwahl vorgesehen sein.

Die erste und/oder die zweite Programmmaske können durch eine hierarchische Baumstruktur repräsentiert werden, wobei jeder Teil der Programmmaske durch einen Knoten in der Baumstruktur repräsentiert wird, wobei jeder Teil der Programmmaske eine Anzahl von Teilen der Programmmaske umfassen kann, und wobei die Aktualisierungsnachricht Informationen darüber umfasst, welche Knoten der Baumstruktur wie zu aktualisieren sind.

Die erste und/oder die zweite Programmmaske können ein Anzeigefeld zur Anzeige der ersten oder der zweiten eindeutigen Kennung und ein Eingabefeld zur Eingabe der ersten oder der zweiten eindeutigen Kennung aufweisen.

Die Programmmaske kann eine Eingabemaske eines Computerprogramms oder eine Internetseite sein.

Besonders vorteilhaft ist es, wenn die erste und die zweite eindeutige Kennung jeweils eine Ziffernfolge sind, wobei die Anzahl der Ziffern der ersten Kennung verschieden von der Anzahl der Ziffern der zweiten Kennung ist.

Ganz besonders vorteilhaft ist es, wenn die zweite Kennung weniger Ziffern aufweist als die erste Kennung.

Die Servereinrichtung kann Bestandteil der ersten Clienteinrichtung und/oder der zweiten Clienteinrichtung sein, insbesondere als auf der ersten Clienteinrichtung und/oder auf der zweiten Clienteinrichtung ausführbarer Dienst.

Bereitgestellt wird de Weiteren eine Servereinrichtung, die mit zumindest einer ersten Clienteinrichtung und einer zweiten Clienteinrichtung koppelbar ist, wobei die Servereinrichtung angepasst ist ein erfindungsgemäßes Verfahren auszuführen.

Ferner wird ein Computerprogrammprodukt bereitgestellt, das in den Speicher einer Servereinrichtung geladen werden kann und welches Programmabschnitte umfasst, mit denen die Schritte eines erfindungsgemäßen Verfahrens ausgeführt werden, wenn das Computerprogrammprodukt auf der Servereinrichtung zu Ausführung gebracht wird.

Bereitgestellt wird auch eine Signalfolge, insbesondere Computer lesbare und für die Übertragung in einem Kommunikationsnetzwerk geeignete Signalfolge, wobei die Signalfolge Daten repräsentiert, mit denen, wenn sie in einen Prozessor eines Computers, insbesondere eine erfindungsgemäße Servereinrichtung, geladen werden, ein erfindungsgemäßes Verfahren zur Ausführung bringbar ist

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: einen Ausschnitt einer Webseite;
- Fig. 2a: ein Blockdiagramm eines erfindungsgemäßen Systems zur Erläuterung der erfindungsgemäßen Verfahrens in einem Online-Modus;
- Fig. 2b: ein alternatives Blockdiagramm eines erfindungsgemäßen Systems zur Erläuterung der erfindungsgemäßen Verfahrens in einem Offline-Modus;
- Fig. 3: ein Sequenzdiagramm eines erfindungsgemäßen Verfahrens;
- Fig. 4: ein Sequenzdiagramm eines erfindungsgemäßen Verfahrens;
- Fig. 5: ein Ablaufdiagramm eines erfindungsgemäßen Verfahrens, in dem die Verfahren gemäß Fig. 3 und Fig. 4 kombiniert sind; und
- Fig. 6: ein Beispiel einer Programmmaske, die gemäß dem erfindungsgemäßen Verfahren angepasst bzw. geändert wird.

### Detaillierte Beschreibung der Erfindung

Die Erfindung wird nachfolgend am Beispiel einer Internetseite (auch Webseite genannt) einer Website beschrieben, die von einem Kunden an einer Clienteinrichtung aufgerufen wird und für die der Kunde Unterstützung bei einem Supportmitarbeiter des Betreibers der Website erhält. Die Erfindung ist aber nicht auf Internetseiten beschränkt. Es können auch Programmmasken von Computerprogrammen (z.B. Betriebssysteme, Anwendungsprogramme oder sogenannte APPs), die lokal auf einem Computer, einem Smartphone, einem Tablet-PC oder dergleichen ausgeführt werden, synchronisiert werden.

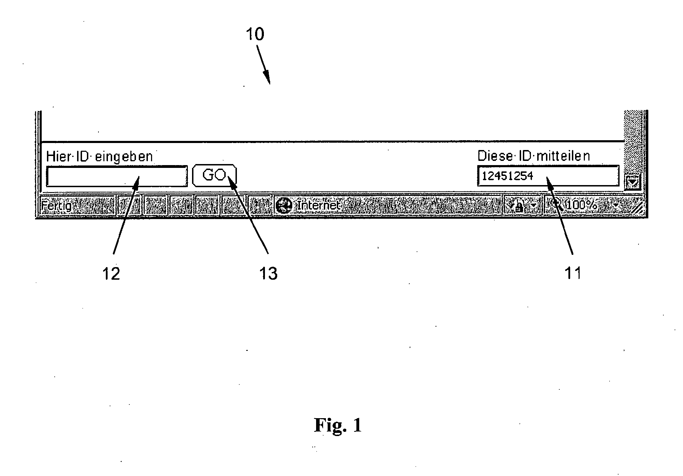

**Fig. 1** zeigt eine Programmmaske 10, etwa eine Internetseite einer Website, die beim Kunden an dessen Clienteinrichtung, etwa ein Computer, ein Tablet-PC oder ein Smartphone zur Anzeige gebracht wird. Die Internetseite 10 kann beispielsweise eine Produktseite sein, auf der Informationen zu einem bestimmten Produkt, Verfügbarkeit des Produktes, ein Produktpreis, Lieferdauer, etc. angezeigt werden.

Im unteren Bereich bzw. im Fußbereich der Internetseite 10 werden ein Anzeigefeld 11, ein Eingabefeld 12 und eine dem Eingabefeld zugeordnete Schaltfläche 13 angezeigt. In dem Anzeigefeld 11 wird eine eindeutige Kennung der Programmmaske bzw. Internetseite 10 angezeigt, die bei Aufruf der Internetseite 10 von einem Webserver dynamisch generiert wird. In dem Eingabefeld 12 kann der Kunde eine weitere eindeutige Kennung eingeben, die beispielsweise von dem Supportmitarbeiter dem Kunden mitgeteilt wird. Die in das Eingabefeld 12 einzugebende eindeutige Kennung identifiziert ebenfalls eine Internetseite der Website und wird ebenfalls von dem Webserver dynamisch erzeugt. Durch Betätigen der Schaltfläche 13 kann der Kunde die in das Eingabefeld 12 eingegebene eindeutige Kennung bestätigen und die der bestätigten eindeutigen Kennung zugeordnete Programmmaske bzw. Internetseite von dem Webserver anfordern.

Die von dem Kunden in das Eingabefeld 12 eingegebene eindeutige Kennung wird dem Kunden von dem Supportmitarbeiter mitgeteilt, der das Generieren der eindeutigen Kennung für die entsprechende Internetseite veranlasst hat. Dies kann beispielsweise durch Aufrufen der entsprechenden Internetseite durch den Supportmitarbeiter erfolgen, wobei die dynamisch generierte eindeutige Kennung dem Supportmitarbeiter mitgeteilt wird, der diese wiederum dem Kunden mitteilen kann.

Nachdem der Kunde die von dem Supportmitarbeiter erhaltene eindeutige Kennung in das Eingabefeld 12 eingegeben hat und die Eingabe mit der Schaltfläche 13 bestätigt hat, wird sowohl bei dem Kunden als auch beim Supportmitarbeiter die selbe Internetseite 10 zur Anzeige gebracht, womit die beim Kunden und beim Supportmitarbeiter, angezeigten Internetseiten synchronisiert sind.

Die Synchronisierung der beim Kunden und beim Supportmitarbeiter angezeigten Webseiten kann auch in umgekehrter Richtung erfolgen. Hierzu teilt der Kunde dem Supportmitarbeiter die in dem Anzeigefeld 11 angezeigte eindeutige Kennung mit, der dann in entsprechender Weise die zu dieser eindeutigen Kennung zugehörige Internetseite abrufen kann; womit die beim Kunden und beim Supportmitarbeiter angezeigten Webseiten synchronisiert sind.

Vorzugsweise bestehen die eindeutigen Kennungen jeweils aus einer Ziffernfolge. Die beiden Ziffernfolgen können unterschiedliche lang sein.

In einer bevorzugten Ausgestaltung der Erfindung ist die in das Eingabefeld 12 einzugebende Ziffernfolge kürzer ist als die in dem Anzeigefeld 11 angezeigte Ziffernfolge. Dies hat den Vorteil, dass die Übermittlung der in das Eingabefeld 12 einzugebenden eindeutigen Kennung weniger fehleranfällig ist und schneller eingegeben werden können.

Die in das Eingabefeld 12 einzugebende Ziffernfolge kann aber auch länger sein als die in dem Anzeigefeld 11 angezeigte Ziffernfolge.

Die Verwendung von Ziffernfolgen hat zusätzlich den Vorteil, dass die Identifizierung von Internetseiten sprachenunabhängig ist, was einen weltweiten Einsatz des erfindungsgemäßen Verfahrens ermöglicht bzw. erheblich vereinfacht.

Der Bereich, in dem das Anzeigefeld 11, das Eingabefeld 12 und die Schaltfläche 13 angezeigt werden, ist vorzugsweise so ausgestaltet, dass dieser unabhängig von der Scrollposition der Internetseite immer sichtbar, vorzugsweise im Fußbereich, bleibt.

Das vorstehend beschriebene Verfahren unter Verwendung eines Anzeigefeldes 11 und eines Eingabefeldes 12 ist insbesondere dann vorteilhaft, wenn der Kunde eine Website besucht, die keine Authentifizierung (etwa mittels eines Logins) erfordert, denn ohne entsprechendes Login fehlt dem Supportmitarbeiter die Information darüber, welche Internetseite 10 der Kunde aktuell angefordert hat.

Für Websites, die eine Authentifizierung des Kunden erfordern, kann auf das Anzeigefeld 11, das Eingabefeld 12 und die Schaltfläche 13 verzichtet werden. In diesem Fall kann der Supportmitarbeiter für den eingeloggten Kunden auf dem Webserver eine eindeutige Kennung für eine Internetseite, die auf der Clienteinrichtung des Kunden zur Anzeige gebracht werden soll, erzeugen lassen und die erzeugte eindeutige Kennung beispielsweise in einer Datenbank speichern, wobei die erzeugte eindeutige Kennung in der Datenbank dem eingeloggten Kunden zugeordnet wird. Die beim Kunden angezeigte Internetseite kann angepasst sein, zyklisch Anfragen an den Webserver zu stellen, um zu ermitteln, ob eine solche eindeutige Kennung hinterlegt ist. Sofern dies der Fall ist, kann die Internetseite unter Verwendung der hinterlegten eindeutigen Kennung die zu dieser Kennung gehörende Internetseite anfordern, ähnlich dem Vorgehen, wenn in das Eingabefeld 12 eine eindeutige Kennung eingetragen wird, die mit der Schaltfläche 13 bestätigt wird. Ein manuelles Eintragen einer eindeutigen Kennung in das Eingabefeld 12 durch den Kunden kann damit vollständig entfallen, was zu einer erheblichen Erhöhung der Sicherheit führt, da weder Kennungen außerhalb des Systems ausgetauscht werden müssen, noch Kennungen in das Eingabefeld 12 eingegeben werden müssen.

Wird zur Synchronisation der Programmmasken das Anzeigefeld 11 und das Eingabefeld 12 verwendet, weil etwa der Kunde nicht eingeloggt ist, wäre es auch möglich, anstelle von eindeutigen numerischen Kennungen auch eine Internetadresse (URL) in das Eingabefeld 12 einzutragen und die mit dieser URL identifizierte Internetseite mittels Bestätigung der Schaltfläche 13 anzufordern. Dies hat allerdings den erheblichen Nachteil, dass eine beim Kunden angezeigte Internetseite 10 für genau diesen Kunden nicht mehr geändert bzw. angepasst werden kann, ohne dass andere Kunden, die die selbe Internetseite anfordern, ebenfalls die Änderungen angezeigt bekommen. Rufen beispielsweise zwei verschiedene Kunden ein und dieselbe Internetseite auf, kann nicht mehr unterschieden werden, für welchen der beiden Kunden die an dieser Internetseite vorgenommenen Änderungen gelten sollen.

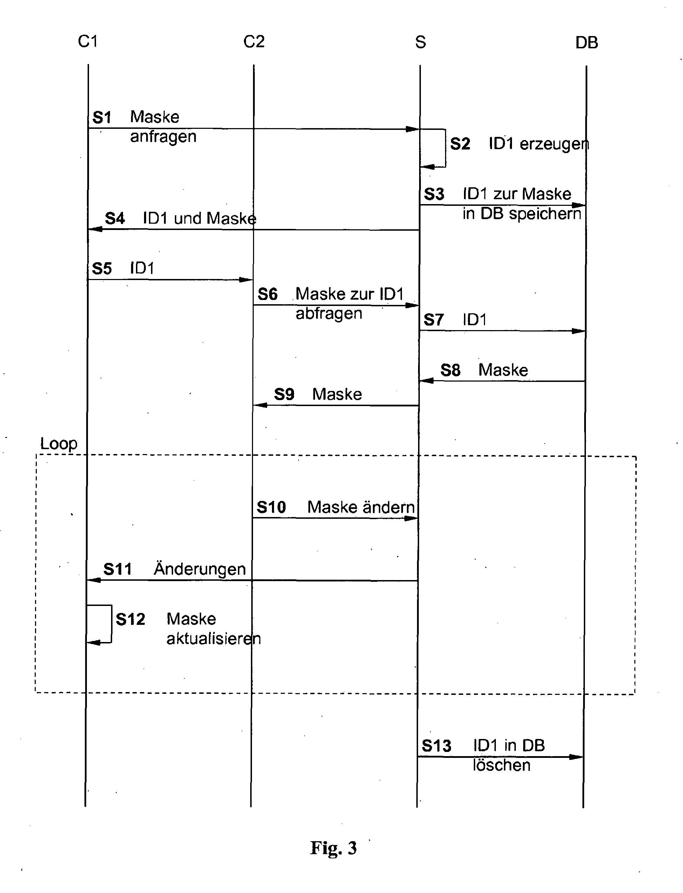

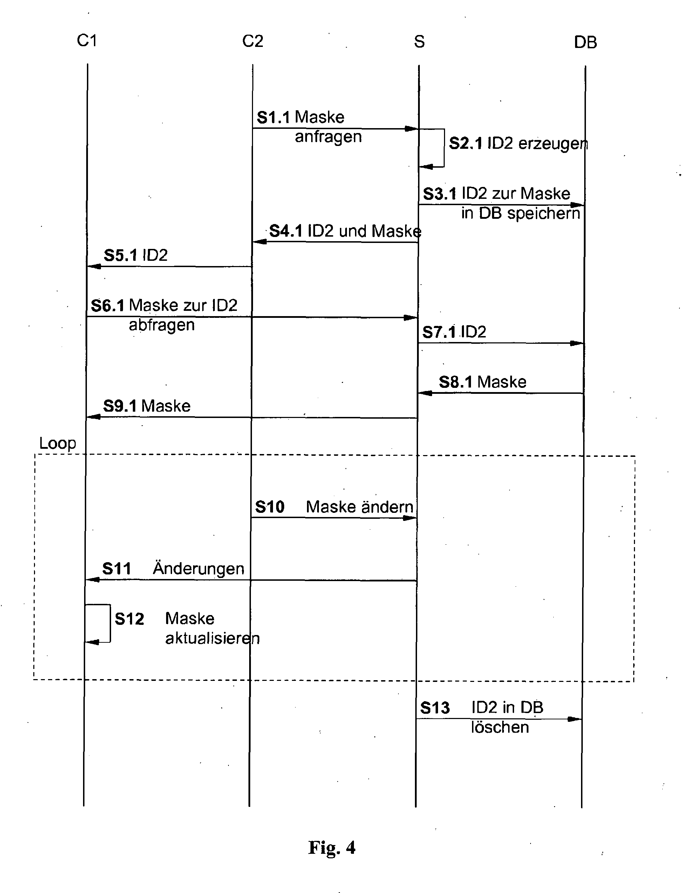

Dieses Problem wird durch die Verwendung von eindeutigen Kennungen vermieden, indem für ein und dieselbe Internetseite die von unterschiedlichen Kunden angefragt werden, jeweils unterschiedliche Kennungen erzeugt werden. Dadurch kann für einen bestimmten Kunden eine Änderung der Internetseite vorgenommen werden, ohne dass andere Kunden, die dieselbe Internetseite abrufen, von dieser Änderung erfahren. Die Änderung einer Internseite wird erfindungsgemäß der eindeutigen Kennung der Internetseite zugeordnet, wie nachfolgend mit Bezug auf Fig. 3 und Fig. 4 näher beschrieben.

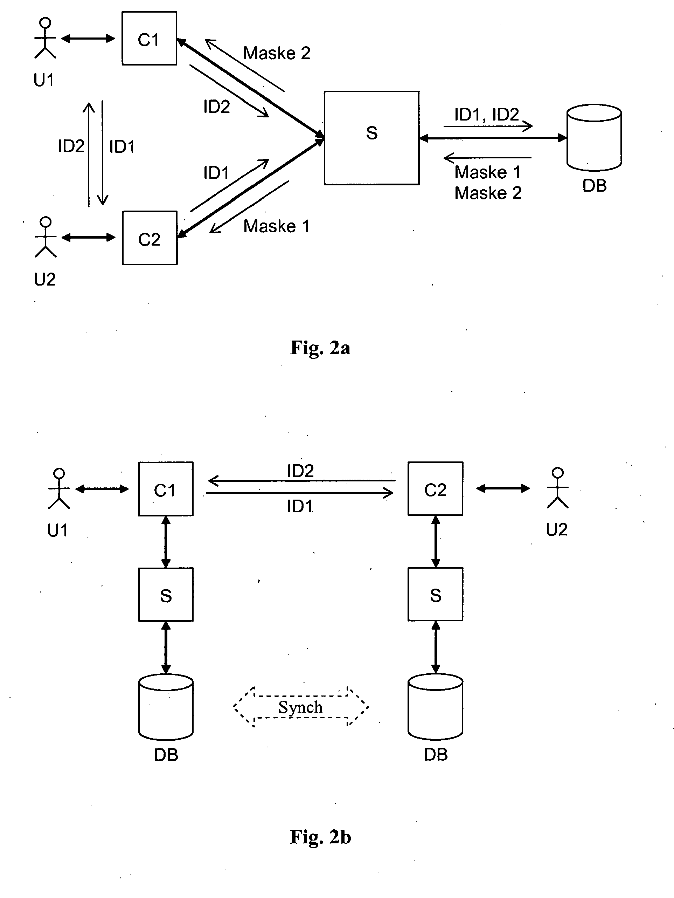

**Fig. 2a** zeigt ein Blockdiagramm eines erfindungsgemäßen Systems zur Erläuterung des erfindungsgemäßen Verfahrens zur Synchronisierung von Programmmasken in einem Online-Modus.

Eine erste Clienteinrichtung C1 und eine zweite Clienteinrichtung C2 sind über ein Kommunikationsnetzwerk, etwa das Internet, mit einer Servereinrichtung S gekoppelt (Online-Modus), wobei die Servereinrichtung ein Webserver sein kann. Die Servereinrichtung ist mit einer Datenbank DB gekoppelt. Die erste Clienteinrichtung C1 ist einem ersten Benutzer U1, der beispielsweise ein Kunde sein kann, zugeordnet. Die zweite Clienteinrichtung C2 ist einem zweiten Benutzer U2, der beispielsweise ein Supportmitarbeiter sein kann, zugeordnet. Auf der Servereinrichtung S wird eine Website gehostet, dessen Internetseiten sowohl von der ersten Clienteinrichtung C1 als auch von der zweiten Clienteinrichtung C2 abrufbar sind.

Der erste Benutzer U1 fordert über die erste Clienteinrichtung C1 eine Internetseite von dem Servereinrichtung S an, die an der ersten Clienteinrichtung C1 zur Anzeige gebracht wird und die das in Fig. 1 gezeigte Anzeigefeld 11 aufweist. Beim Anfordern der Internetseite über die Clienteinrichtung C1 wird von der Servereinrichtung S eine erste eindeutige Kennung ID1 erzeugt und in der Datenbank DB abgespeichert, wobei in der Datenbank die eindeutige Kennung ID1 der angeforderten Internetseite zugeordnet wird. Die erzeugte erste eindeutige Kennung ID1 wird zusammen mit der angeforderten Internetseite an die erste Clienteinrichtung C1 übertragen und dort in dem Anzeigefeld 11 zur Anzeige gebracht.

Der erste Benutzer U1 kann nun die angezeigte erste eindeutige Kennung ID1 dem zweiten Benutzer U2 mitteilen. Der zweite Benutzer U2 kann die ihm mitgeteilte erste eindeutige Kennung ID1 in ein Support-Eingabefeld an der zweiten Clienteinrichtung C2 eingeben und die zu dieser eindeutigen Kennung zugehörige Internetseite von dem Webserver S anfordern. Hierzu wird die erste eindeutige Kennung ID1 von der zweiten Clienteinrichtung C2 an die Servereinrichtung S übertragen, die anhand der ersten eindeutigen Kennung ID1 die zu dieser eindeutigen Kennung gehörende Internetseite aus der Datenbank DB abfragt. Die ermittelte Internetseite (Maske 1) wird dann von der Servereinrichtung S an die zweite Clienteinrichtung C2 übertragen und dort zur Anzeige gebracht. Die an der ersten Clienteinrichtung C1 und an der zweiten Clienteinrichtung C2 angezeigten Internetseiten sind nun synchron, d.h., den Benutzern U1 und U2 wird dieselbe Internetseite zur Anzeige gebracht. In der Folge können sich der erste Benutzer U1 und der zweite Benutzer U2 über die angezeigte Internetseite unterhalten.

Stellen beide Benutzer U1, U2 fest, dass beispielsweise das auf der angezeigten Internetseite beworbene Produkt nicht die gewünschten Leistungsmerkmale aufweist, kann der zweite Benutzer U2 bzw. der Supportmitarbeiter den ersten Benutzer U1 bzw. den Kunden auf eine andere Internetseite "lotsen", auf der ein alternatives Produkt beworben wird. Hierzu fordert der zweite Benutzer U2 über die zweite Clienteinrichtung C2 eine alternative Internetseite von der Servereinrichtung S an. Für die angeforderte alternative Internetseite erzeugt die Servereinrichtung S eine zweite eindeutige Kennung ID2 und speichert die zweite eindeutige Kennung ID2 in der Datenbank DB. Die zweite eindeutige Kennung ID2 wird in der Datenbank der angeforderten alternativen Internetseite zugeordnet. Als Reaktion auf die Anforderung der alternativen Internetseite wird die alternative Internetseite zusammen mit der zweiten eindeutigen Kennung ID2 an die zweite Clienteinrichtung C2 übertragen und dort für den zweiten Benutzer U2 zur Anzeige gebracht.

Der zweite Benutzer U2 kann nun die zweite eindeutige Kennung ID2 dem ersten Benutzer U1 mitteilen. Der erste Benutzer U1 kann die ihm mitgeteilte zweite eindeutige Kennung ID2 in das Eingabefeld 12 der auf der ersten Clienteinrichtung C1 angezeigten Internetseite eingeben und die Eingabe mit der Schaltfläche 13 bestätigen. Durch Bestätigung der Eingabe wird von der ersten Clienteinrichtung C1 durch Übertragen der zweiten eindeutigen Kennung ID2 an die Servereinrichtung S die der zweiten eindeutigen Kennung ID2 zugeordnete Internetseite angefordert. Hierzu ermittelt die Servereinrichtung S die der zweiten eindeutigen Kennung ID2 in der Datenbank DB zugeordnete Internetseite und überträgt die ermittelte Internetseite (Maske 2) an die erste Clienteinrichtung C1, wo sie für den ersten Benutzer U1 zur Anzeige gebracht wird.

Damit sind die an der ersten Clienteinrichtung C1 und an der zweiten Clienteinrichtung C2 angezeigten Internetseiten wieder synchronisiert.

Wie vorstehend mit Bezug auf Fig. 1 erläutert, kann der Austausch der eindeutigen Kennungen ID1, ID2 zwischen den beiden Benutzern U1, U2 auch innerhalb des Systems erfolgen, d.h., die Benutzer U1, U2 müssen die entsprechenden eindeutigen Kennungen nicht mehr manuell eingeben. Hierzu ist es lediglich notwendig, dass sich der erste Benutzer U1 bzw. Kunde gegenüber dem zweiten Benutzer U2 bzw. Supportmitarbeiter authentifiziert, etwa durch Mitteilung eines Login-Namens oder einer sonstigen den ersten Benutzer U1 eindeutig identifizierenden Kennung. Sobald dem Supportmitarbeiter U2 die den Kunden U1 eindeutig identifizierende Kennung bekannt ist, kann der Austausch der eindeutigen Kennungen ID1, ID2 vollständig innerhalb des Systems abgewickelt werden, wie vorstehend mit Bezug auf Fig. 1 erläutert, ohne dass der Supportmitarbeiter U2 dem Kunden U1 (oder der Kunde dem Supportmitarbeiter) die Kennung etwa telefonisch mitteilen muss.

**Fig. 2b** zeigt ein alternatives Blockdiagramm eines erfindungsgemäßen Systems zur Erläuterung des erfindungsgemäßen Verfahrens zur Synchronisierung von Programmmasken in einem Offline-Modus.

Eine erste Clienteinrichtung C1, die einem ersten Benutzer U1 zugeordnet ist, ist über ein Kommunikationsnetzwerk mit einer Servereinrichtung S1 gekoppelt. Die Servereinrichtung S1 ist ihrerseits mit einer Datenbank DB1 gekoppelt. Die Servereinrichtung S1 kann auch Bestandteil der Clienteinrichtung C1 sein, wobei die Clienteinrichtung C1 mit der Datenbank DB1 gekoppelt ist. In einer weiteren Ausgestaltung kann die Datenbank DB1 auch Bestandteil der Clienteinrichtung C1 sein, sodass die Clienteinrichtung C1 sowohl die Servereinrichtung S1 als auch die Datenbank DB1 umfasst. Die Servereinrichtung als Bestandteil der ersten Clienteinrichtung C₁ kann als auf der ersten Clienteinrichtung C₁ ausführbare Dienst ausgestaltet sein.

Die erste Servereinrichtung S1 kann einen Anwendungsserver bzw. einen Internetserver umfassen.

Eine zweite Clienteinrichtung C2, die einem zweiten Benutzer U2 zugeordnet ist, ist über ein Kommunikationsnetzwerk mit einer zweiten Servereinrichtung S2 gekoppelt, die ihrerseits wiederum mit einer zweiten Datenbank DB2 gekoppelt sein kann. Die Servereinrichtung S2 kann auch Bestandteil der Clienteinrichtung C2 sein, wobei die Clienteinrichtung C2 mit der Datenbank DB2 gekoppelt ist. Die zweite Clienteinrichtung C2 kann die zweite Servereinrichtung S2 und/oder die zweite Datenbank DB2 umfassen. Die Servereinrichtung als Bestandteil der zweiten Clienteinrichtung C₂ kann als auf der zweiten Clienteinrichtung C₂ ausführbare Dienst ausgestaltet sein.

In dem Offline-Modus sind jedenfalls die Servereinrichtungen S1, S2 und/oder die Datenbanken DB1, DB2 nicht über ein Kommunikationsnetzwerk miteinander gekoppelt.

Auf der ersten Servereinrichtung S1 und auf der zweiten Servereinrichtung S2 können mehrere Websites oder mehrere Anwendungsprogramme gehostet sein. Beispielsweise kann auf beiden Servereihrichtungen S1, S2 eine Produkt-Website und/oder ein Betriebssystem oder ein sonstiges Anwendungsprogramm gehostet werden.

In der ersten Datenbank DB1 und in der zweiten Datenbank DB2 werden für eine bestimmte Anwendung (Website bzw. Anwendungsprogramm) für jede Programmmaske der Anwendung jeweils eine eindeutige Kennung gespeichert, wobei in beiden Datenbanken DB1, DB2 für die selbe Programmmaske die selbe eindeutige Kennung gespeichert ist und der Programmmaske zugeordnet ist.

Der erste Benutzer U1 fordert über die erste Clienteinrichtung C1 eine Programmmaske von der ersten Servereinrichtung S1 an, die an der ersten Clienteinrichtung C1 zur Anzeige gebracht wird. Bevor die angeforderte Programmmaske an der ersten Clienteinrichtung C1 zur Anzeige gebracht wird, ermittelt die Servereinrichtung S1 die der angeforderten Programmmaske zugeordnete eindeutige Kennung in der ersten Datenbank DB1. Die angeforderte Programmmaske wird dann zusammen mit der eindeutigen Kennung (erste eindeutige Kennung ID1) an die erste Clienteinrichtung C1 übertragen und dort zusammen mit der angeforderten Programmmaske zur Anzeige gebracht.

Die ermittelte und an der ersten Clienteinrichtung C1 zur Anzeige gebrachte erste eindeutige Kennung ID1 wird dann an die zweite Clienteinrichtung C2 übertragen, was beispielsweise dadurch geschehen kann, dass der erste Benutzer U1 den zweiten Benutzer U2 die erste eindeutige Kennung ID1 mitteilt, sofern zwischen der ersten Clienteinrichtung C1 und der zweiten Clienteinrichtung C2 keine Kommunikationsverbindung vorhanden ist. Sofern zwischen.beiden Clienteinrichtungen C1, C2 eine Kommunikationsverbindung vorhanden ist, kann die erste eindeutige Kennung ID1 über diese Kommunikationsverbindung von der ersten Clienteinrichtung C1 an die zweite Clienteinrichtung C2 übertragen werden.

Nach Übermittlung der ersten eindeutigen Kennung ID1 kann der zweite Benutzer U2 diese in ein Support-Eingabefeld an der zweiten Clienteinrichtung C1 eingeben und die zu dieser eindeutigen Kennung ID1 zugehörige Programmmaske von der zweiten Servereinrichtung S2 anfordern. Hierzu wird die erste eindeutige Kennung ID1 von der zweiten Clienteinrichtung C2 an die Servereinrichtung S2 übertragen, die anhand der ersten eindeutigen Kennung ID1 die zu dieser eindeutigen Kennung gehörende Programmmaske aus der Datenbank DB2 abfragt. Die ermittelte Programmmaske wird dann von der Servereinrichtung S2 an die zweite Clienteinrichtung C2 übertragen und dort zur Anzeige gebracht.

Die an der ersten Clienteinrichtung C1 und an der zweiten Clienteinrichtung C2 angezeigten Programmmasken sind nun synchron, d.h., den Benutzern U1 und U2 wird die selbe Programmmaske zur Anzeige gebracht. In der Folge können sich der erste Benutzer U1 und der zweite Benutzer U2 über die angezeigten Programmmasken unterhalten.

Der zweite Benutzer U2, der beispielsweise ein Supportmitarbeiter sein kann, hat nun die Möglichkeit den ersten Benutzer, beispielsweise einen Kunden, auf eine andere Programmmaske zu "lotsen". Hierzu fordert der zweite Benutzer U2 über die zweite Clienteinrichtung C2 eine alternative Programmmaske von der zweiten Servereinrichtung S2 an. Für die angeforderte alternative bzw. zweite Programmmaske ermittelt die Servereinrichtung S2 eine zweite eindeutige Kennung ID2 und überträgt diese zusammen mit der angeforderten zweiten Programmmaske an die zweite Clienteinrichtung C2, wo sie zusammen mit der angeforderten Programmmaske zur Anzeige gebracht wird.

Der zweite Benutzer U2 kann nun diese zweite eindeutige Kennung ID2 dem ersten Benutzer U1 mitteilen, sofern zwischen der ersten Clienteinrichtung C1 und der zweiten Clienteinrichtung C2 keine Kommunikationsverbindung besteht. Sollte zwischen den beiden Clienteinrichtungen C1, C2 eine Kommunikationsverbindung bestehen, kann die zweite eindeutige Kennung ID2 von der zweiten Clienteinrichtung C2 an die erste Clienteinrichtung C1 übertragen werden. Mit Empfang der zweiten eindeutigen Kennung ID2 durch die erste Clienteinrichtung C1 kann die erste Clienteinrichtung C1 die zu dieser zweiten eindeutigen Kennung ID2 zugehörige Programmmaske von der ersten Servereinrichtung S1 anfragen. Die angefragte alternative bzw. zweite Programmmaske wird dann an der ersten Clienteinrichtung C1 zur Anzeige gebracht.

Damit sind die an der ersten Clienteinrichtung C1 und an der zweiten Clienteinrichtung C2 angezeigten Internetseiten wieder synchronisiert.

Das mit Fig. 2b beschriebene Verfahren kann auch zur Synchronisation von Programmmasken verwendet werden, die beispielsweise zu dem Betriebssystem der ersten bzw. zweiten Clienteinrichtung C1, C2 gehören.

Die erste Clienteinrichtung C1 und die zweite Clienteinrichtung C2 können über ein Kommunikationsnetzwerk, etwa das Internet, miteinander koppelbar sein (wobei zwischen den beiden Servereinrichtungen S1 und S2 keine Koppelung über das Kommunikationsnetzwerk vorgesehen ist, was etwa der Fall sein kann, wenn es sich bei den beiden Servereinrichtungen S1 und S2 um firmeninterne Server handelt, die keinen Zugang zu einem externen Kommunikationsnetzwerk, etwa das Internet haben). Sind beide Clienteinrichtungen C1 und C2 über ein Kommunikationsnetzwerk koppelbar, kann der Austausch der ersten eindeutigen Kennung ID1 und der zweiten eindeutigen Kennung ID2 über das Kommunikationsnetzwerk abgewickelt werden. Die beiden Clienteinrichtungen C1 und C2 sind dann angepasst, eindeutige Kennungen an die jeweils andere Clienteinrichtung zu übertragen bzw. eindeutige Kennungen von der jeweiligen anderen Clienteinrichtung zu empfangen. Vorzugsweise sind dann die beiden Clienteinrichtungen C1 und C2 weiter angepasst, als Reaktion auf eine empfangene eindeutige Kennung eine Anfrage an die jeweilige Servereinrichtung zu veranlassen, um die der empfangenen eindeutigen Kennung zugeordnete Programmmaske von der jeweiligen Servereinrichtung anzufordern.

In einer vorteilhaften Ausgestaltung der Erfindung gemäß der in Fig. 2b gezeigten Konfiguration kann es vorgesehen sein, die Datenbanken DB1 und DB2 zyklisch oder bei Bedarf zu synchronisieren, um zu gewährleisten, dass in beiden Datenbanken den selben Programmmasken auch die selben eindeutigen Kennungen zugeordnet sind. Mit der Synchronisation kann auch gewährleistet werden, dass beispielsweise neue in der Datenbank DB2 hinzugekommene Programmmasken bzw. deren eindeutigen Kennungen auch in der Datenbank DB1 hinzugefügt werden. Sind beispielsweise in den Datenbanken DB1 und DB2 Programmmasken und dazugehörige eindeutige Kennungen einer bestimmten Version eines Anwendungsprogrammes gespeichert, kann sichergestellt werden, dass nach einem Update des Anwendungsprogrammes auf der zweiten Servereinrichtung S2 auf eine neue Version des Anwendungsprogrammes die eindeutigen Kennungen der Programmmasken der neuen Version auch in der Datenbank DB1 zur Verfügung stehen. Das gilt auch für ein Update eines Betriebssystems auf eine neue Version, wobei hier auch ein Update der eindeutigen Kennungen bzw. der Zuordnungen der eindeutigen Kennungen zu den Programmmasken des Betriebsystems durchgeführt wird.

**Fig. 3** zeigt ein Sequenzdiagramm eines erfindungsgemäßen Verfahrens, bei dem die an der zweiten Clienteinrichtung C2 angezeigte Programmmaske, beispielsweise Internetseite, mit der an der ersten Clienteinrichtung C1 angezeigten Programmmaske, etwa Internetseite, synchronisiert wird und bei dem die an der zweiten Clienteinrichtung C2 vorgenommenen Änderungen der Internetseite an der ersten Clienteinrichtung C1 synchronisiert werden.

In einem ersten Schritt S1 wird eine erste Anfragenachricht von der ersten Clienteinrichtung C1 an die Servereinrichtung S übertragen, mit der eine erste Pro-grammmaske von der Servereinrichtung S angefragt wird. Die Servereinrichtung S wertet die empfangene erste Anfragenachricht aus und erzeugt in einem Schritt S2 eine erste eindeutige Kennung ID1, die in einem Schritt S3 in der Datenbank DB gespeichert wird.

Die erste eindeutige Kennung ID1 wird in der Datenbank DB der angefragten ersten Programmmaske zugeordnet. Die eindeutige Kennung ID1 wird für jede angefragte Programmmaske neu erzeugt, wobei für ein und dieselbe Programmmaske, die von unterschiedlichen ersten Clienteinrichtungen C1 angefragt wird, unterschiedliche Kennungen erzeugt und in der Datenbank DB gespeichert werden. Dadurch wird gewährleistet, dass in den Schritten S10 bis S 12 Änderungen, die an einer Programmmaske vorgenommen werden, jeweils an nur eine erste Clienteinrichtung übertragen werden, sodass die Änderungen jeweils an nur einer ersten Clienteinrichtung wirksam werden, selbst wenn die Programmmaske an unterschiedlichen ersten Clienteinrichtungen zur Anzeige gebracht wird. Nachdem die erste eindeutige Kennung ID1 in der Datenbank DB gespeichert wurde und der angefragten Maske zugeordnet wurde, wird die angefragte Programmmaske und die erste eindeutige Kennung ID1 in dem Schritt S4 an die erste Clienteinrichtung C1 übertragen und dort zur Anzeige gebracht. Die erste eindeutige Kennung ID1 kann an der Clienteinrichtung C1 in dem Anzeigefeld 11 angezeigt werden, wie mit Bezug auf Fig. 1 erläutert.

In dem nachfolgenden Schritt S5 wird die eindeutige Kennung ID1 der zweiten Clienteinrichtung C2 mitgeteilt. In dem Schritt S6 wird dann eine zweite Anfragenachricht von der zweiten Clienteinrichtung C2 an die Servereinrichtung S übertragen, wobei die zweite Anfragenachricht zumindest die in dem Schritt S5 entgegengenommene erste eindeutige Kennung ID1 umfasst. Nach Empfangen der zweiten Anfragenachricht ermittelt die Servereinrichtung S in den Schritten S7 und S8 die der entgegengenommenen ersten eindeutigen Kennung ID1 zugeordnete Programmmaske, indem die der ersten eindeutigen Kennung ID1 zugeordnete Programmmaske in der Datenbank DB abgefragt wird. Die so ermittelte Programmmaske wird in dem Schritt S9 an die zweite Clienteinrichtung C2 übertragen und dort zur Anzeige gebracht. Die erste eindeutige Kennung ID1 kann ebenfalls in einem Anzeigefeld 11 an der zweiten Clienteinrichtung C2 angezeigt werden.

Nach Abschluss des Schrittes S9 wird an der ersten Clienteinrichtung C1 und an der zweiten Clienteinrichtung C2 dieselbe Programmmaske angezeigt, sodass die an beiden Clienteinrichtungen angezeigten Programmmasken synchronisiert sind. Die Benutzer U1, U2 der ersten Clienteinrichtung C1 bzw. der zweiten Clienteinrichtung C2 können sich nun über die angezeigte Programmmaske austauschen, was beispielsweise über eine Telekommunikationsverbindung zwischen den beiden Benutzern erfolgen kann. Der Austausch kann aber auch über Direktnachrichten zwischen dem ersten Benutzer und dem zweiten Benutzer erfolgen, wobei die Direktnachrichten in einer von der angefragten Programmmaske unabhängigen weiteren Programmmaske angezeigt bzw. eingegeben werden können. Erfindungsgemäß kann der Benutzer U2, der beispielsweise ein Supportmitarbeiter sein kann, die an der zweiten Clienteinrichtung C2 angezeigte erste Programmmaske ändern, wobei die an der ersten Clienteinrichtung C1 angezeigte Programmmaske mit der an der zweiten Clienteinrichtung C2 angezeigten Programmmaske synchronisiert wird.

Hierzu nimmt der Benutzer U2 an der zweiten Clienteinrichtung C2 Änderungen an der angezeigten Programmmaske vor. Beispielsweise kann der zweite Benutzer U2 wichtige Produktinformationen zu dem in der Programmmaske angezeigtem Produkt hervorheben, vorhandene Texte durch neue Texte ersetzen, den angezeigten Produktpreis durch einen neuen Preis ersetzen, oder dergleichen.

Die von dem Benutzer U2 an der Programmmaske vorgenommenen Änderungen werden mit einer Aktualisierungsnachricht im Schritt S10 an die Servereinrichtung S übertragen. Die Servereinrichtung S stellt die an der Programmmaske vorgenommenen Änderungen zur Übertragung an die erste Clienteinrichtung C1 bereit.

In einer bevorzugten Ausführungsform des erfindungsgemäßen Verfahrens werden die mit der Aktualisierungsnachricht entgegengenommenen Änderungen in der Datenbank DB gespeichert und dort der ersten eindeutigen Kennung ID1 zugeordnet. Durch die Zuordnung der Änderungen zur ersten eindeutigen Kennung ID1 wird gewährleistet, dass die Änderungen nur jene Programmmaske betreffen, die an der ersten Clienteinrichtung C1 angezeigt wird, selbst wenn dieselbe Programmmaske auch an anderen ersten Clienteinrichtungen angezeigt wird.

In einem weiteren Schritt S11 werden die Änderungen von der Servereinrichtung S an die erste Clienteinrichtung C1 übertragen. Hierzu kann die erste Clienteinrichtung C1 bzw. die an der ersten Clienteinrichtung C1 angezeigte Programmmaske ausgestaltet sein, die Servereinrichtung S zyklisch anzufragen, ob für die an der ersten Clienteinrichtung C1 angezeigte Programmmaske (die durch die erste eindeutige Kennung ID1 identifiziert wird) Änderungen vorliegen. Als Reaktion auf eine solche Anfrage werden die Änderungen von der Servereinrichtung S an die erste Clienteinrichtung C1 übertragen oder die erste Clienteinrichtung C1 darüber informiert, dass keine Änderungen vorliegen.

Nachdem die Änderungen in dem Schritt S11 an die erste Clienteinrichtung C1 übertragen worden sind, wird in dem Schritt S 12 die an der ersten Clienteinrichtung C1 angezeigte Programmmaske mit den Änderungen aktualisiert, sodass nach der Aktualisierung der Programmmaske die an der ersten Clienteinrichtung C1 angezeigte Programmmaske synchron zu der an der zweiten Clienteinrichtung C2 angezeigten Programmmaske ist. Wird beispielsweise in der an der zweiten Clienteinrichtung C2 angezeigten Programmmaske der Produktpreis durch einen neuen Preis ersetzt, so wird nach Durchführung der Schritte S 11 und S12 der neue Preis auch in der an der ersten Clienteinrichtung C1 angezeigten Programmmaske angezeigt.

Die Schritte S10 bis S 12 können mehrfach durchgeführt werden, d.h., die an der zweiten Clienteinrichtung C2 angezeigte Programmmaske kann mehrfach geändert werden, wobei jede der vorgenommenen Änderungen ein Aktualisieren der an der ersten Clienteinrichtung C1 angezeigten Programmmaske bewirkt.

In einem letzten Schritt S13 wird die in der Datenbank DB gespeicherte erste eindeutige Kennung ID1 gelöscht, wobei auch die der ersten eindeutigen Kennung ID1 zugeordnete Maske bzw. die der ersten eindeutigen Kennung ID1 zugeordneten Änderungen gelöscht werden. Das in Fig. 3 gezeigte Verfahren ist damit beendet.

**Fig. 4** zeigt ein Sequenzdiagramm eines erfmdungsgemäßen Verfahrens, bei dem der Benutzer U2 der zweiten Clienteinrichtung C2 die erste Clienteinrichtung C1 veranlassen kann, eine neue Programmmaske zur Anzeige zu bringen, und zwar jene, die an der zweiten Clienteinrichtung C2 angezeigt wird.

Das in Fig. 4 gezeigte Verfahren kann als Fortsetzung des in Fig. 3 gezeigten Verfahrens verwendet werden.

In einem ersten Schritt S1.1 wird von der zweiten Clienteinrichtung C2 eine dritte Anfragenachricht an die Servereinrichtung S übertragen, mit der eine zweite Programmmaske von der Servereinrichtung S angefragt wird.

Die Servereinrichtung S nimmt die dritte Anfragenachricht entgegen und erzeugt in einem Schritt S2.1 eine zweite eindeutige Kennung ID2, die in einem weiteren Schritt S3.1 in der Datenbank DB gespeichert wird und dort der angefragten zweiten Programmmaske zugeordnet wird.

In dem Schritt S4.1 wird die angefragte zweite Maske zusammen mit der zweiten eindeutigen Kennung ID2 an die zweite Clienteinrichtung C2 übertragen und dort zur Anzeige gebracht, wobei die zweite eindeutige Kennung ID2 in dem Anzeigefeld 11, wie mit Bezug auf Fig. 1 gezeigt, angezeigt werden kann.

In dem nächsten Schritt S5.1 wird die zweite eindeutige Kennung ID2 von der zweiten Clienteinrichtung C2 der ersten Clienteinrichtung C1 mitgeteilt.

Alternativ kann die zweite eindeutige Kennung ID2 durch die erste Clienteinrichtung C1 von der Servereinrichtung S angefragt werden und von der Servereinrichtung S an die erste Clienteinrichtung C1 übertragen werden. In diesem Fall wird die zweite eindeutige Kennung ID2 von der Servereinrichtung S zur Übertragung an die erste Clienteinrichtung C1 bereitgehalten. Die erste Clienteinrichtung C1 kann zyklisch die Servereinrichtung S anfragen, ob eine neue eindeutige Kennung, d.h. die eindeutige Kennung ID2 zur Übertragung bereitsteht.

Sobald die zweite eindeutige Kennung ID2 an der ersten Clienteinrichtung C1 zur Verfügung steht, wird von der ersten Clienteinrichtung C1 eine vierte Anfragenachricht an die Servereinrichtung S übertragen, die zumindest die zweite eindeutige Kennung ID2 umfasst. Nach Entgegennehmen der vierten Anfragenachricht durch die Servereinrichtung S ermittelt die Servereinrichtung in den Schritten S7.1 und S8.1 in der Datenbank DB die der zweiten eindeutigen Kennung ID2 zugeordnete zweite Programmmaske. Die so ermittelte Programmmaske wird dann von der Servereinrichtung S in dem Schritt S9.1 an die erste Clienteinrichtung C1 übertragen und dort zur Anzeige gebracht. Damit ist die an der ersten Clienteinrichtung C1 angezeigte Programmmaske synchron zu der an der zweiten Clienteinrichtung C2 angezeigten Programmmaske.

In den nachfolgenden Schritten S10 bis S 12 kann die an der zweiten Clienteinrichtung C2 angezeigte Programmmaske geändert werden, wobei die an der ersten Clienteinrichtung C1 angezeigte Programmmaske mit den Änderungen synchronisiert wird.

Die Schritte S10 bis S 12 entsprechen hierbei den Schritten S10 bis S 12 in Fig. 3, weshalb auf eine nochmalige Beschreibung dieser Schritte verzichtet wird.

In einem letzten Schritt des Verfahrens gemäß Fig. 4 wird die in der Datenbank DB gespeicherte zweite eindeutige Kennung ID2 gelöscht, wobei auch die der zweiten eindeutigen Kennung ID2 zugeordnete Programmmaske bzw. zugeordneten Änderungen gelöscht werden.

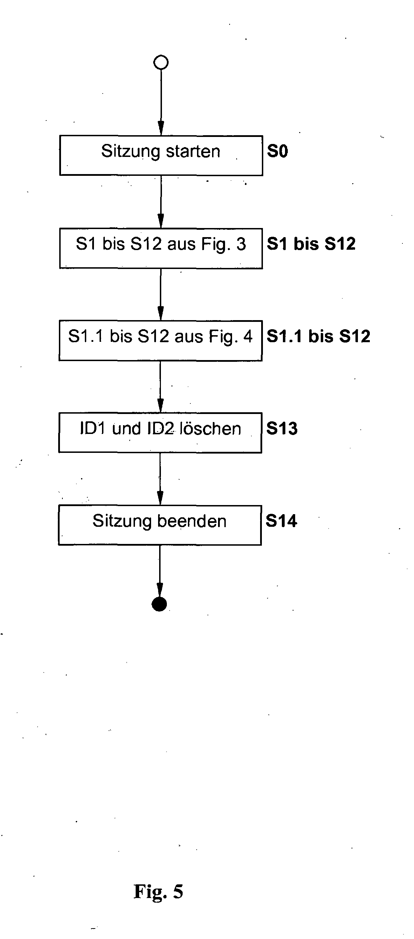

**Fig. 5** zeigt ein Flussdiagramm eines erfindungsgemäßen Verfahrens, bei dem die Verfahren gemäß Fig. 3 und Fig. 4 zeitlich hintereinander zur Ausführung gebracht werden.

In einem ersten Schritt S0 wird hier eine Sitzung für die erste Clienteinrichtung C1 gestartet, die beispielsweise durch Anfordern einer Programmmaske durch die erste Clienteinrichtung initiiert werden kann. Im Rahmen des Sitzungsaufbaus kann auch eine Authentifizierung des ersten Benutzers U1 gegenüber der Servereinrichtung S abgewickelt werden. Vorzugsweise wird die Sitzung durch eine eindeutige Sitzungskennung identifiziert. Die Sitzungskennung kann eine Sitzungs-ID oder das Login des ersten Benutzers sein. Die Sitzungskennung wird verwendet, um den ersten Benutzer an der ersten Clienteinrichtung C1 eindeutig zu identifizieren bzw. den ersten Benutzer U1 an der ersten Clienteinrichtung von anderen Benutzern an anderen ersten Clienteinrichtungen zu unterscheiden.

Sofern keine Sitzung gestartet wird, kann als Unterscheidungsmerkmal für verschiedene Benutzer an unterschiedlichen ersten Clienteinrichtungen beispielsweise auch die MAC-Adresse, eine Browser-Kennung (sofern es sich bei der zu synchronisierenden Programmmaske um eine Internetseite handelt), eine Software-Lizenznummer, eine Hardware-Seriennummer, ein EAN-Code oder ein eindeutiges biometrisches Merkmal verwendet werden. Als eindeutiges Unterscheidungsmerkmal kann auch eine Telefonnummer, ggf. mit einer Vorwahl vorgesehen sein.

Nachdem die Sitzung gestartet wurde, werden die Schritte S1 bis S 12 des in Fig. 3 gezeigten Verfahrens ausgeführt, mit dem die an einer zweiten Clienteinrichtung C2 angezeigte Programmmaske mit der an einer ersten Clienteinrichtung C1 angezeigten Programmmaske synchronisiert wird.

Als nächstes werden die Schritte S 1.1 bis S 12 des Verfahrens gemäß Fig. 4 ausgeführt, mit dem die an der ersten Clienteinrichtung C1 angezeigte Progranimmaske mit der an der zweiten Clienteinrichtung C2 angezeigten Programmmaske synchronisiert wird.

Zum Abschluss des Verfahrens werden die erste eindeutige Kennung ID1 und die zweite eindeutige Kennung ID2 in der Datenbank DB gelöscht und in dem Schritt S14 die Sitzung beendet.

Mit den vorstehend beschriebenen erfindungsgemäßen Verfahren ist es nunmehr möglich, Programmmasken nahezu in Echtzeit zu synchronisieren.

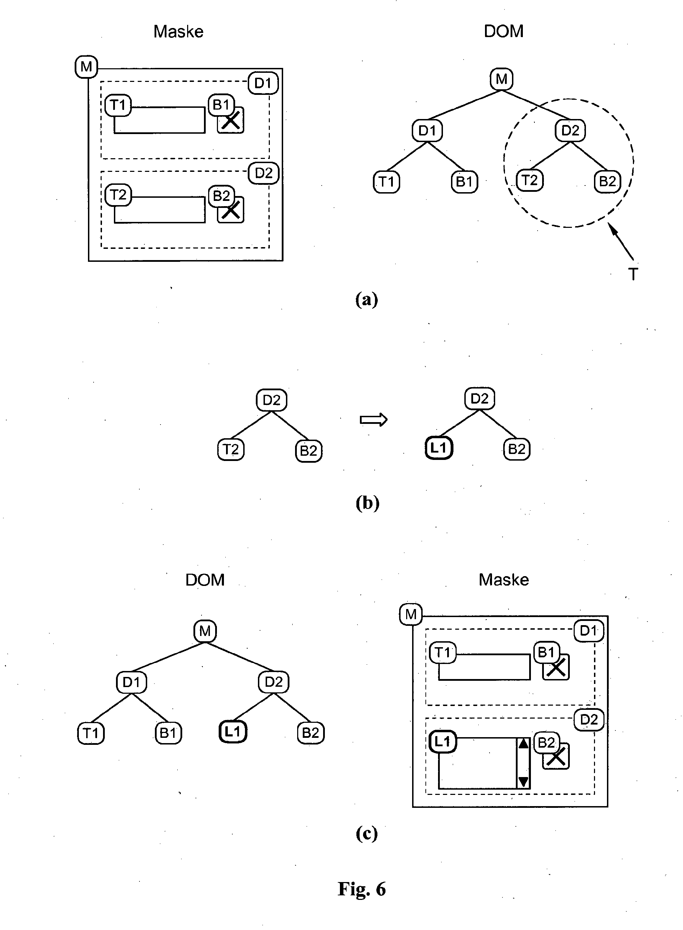

**Fig. 6** zeigt anhand einer Programmmaske, die eine Internetseite ist, wie eine Aktualisierung einer Internetseite gemäß der Verfahrensschritte S10 bis S12 (vgl. Fig. 3 und Fig. 4) abgewickelt werden kann.

Fig. 6a zeigt eine Programmmaske, die an der ersten Clienteinrichtung C1 und an der zweiten Clienteinrichtung C2 angezeigt wird, und eine hierarchische Baumstruktur, die die Progrämmmaske repräsentiert.

Die Programmmaske besteht aus einem übergeordneten Element M, das den Wurzelknoten der hierarchischen Baumstruktur bildet. Die Maske bzw. das Element M umfasst zwei Bereiche D1, D2 (etwa sogenannte HTML-DIV's), die in der hierarchischen Baumstruktur jeweils einen Sohnknoten des Wurzelknotens M bilden. Jeder der zwei Bereiche D1, D2 umfasst hier ein Eingabefeld T1 bzw. T2 und eine Checkbox B1 bzw. B2. Das Eingabefeld T1 und die Checkbox B1 bilden in der hierarchischen Baumstruktur Sohnknoten des Elements D1. Das Eingabefeld T2 und die Checkbox B2 bilden in der hierarchischen Baumstruktur Sohnknoten des Elements D2.

Gemäß dem in Fig. 6 gezeigten Beispiel soll nun das Eingabefeld T2 durch ein Listenfeld L1 ersetzt werden. Der Benutzer U2 an der zweiten Clienteinrichtung C2 kann hierbei das Eingabefeld T2 entfernen und in dem Bereich D2 ein neues Listenfeld L1 einfügen. Der von der Änderung betroffene Teil T der hierarchischen Baumstruktur ist in Fig. 6b gezeigt, wobei hier erkennbar ist, dass der Knoten T2 durch den Knoten L1 ersetzt wird, d.h. der Knoten L1 wird als Sohn des Knotens T2 in die hierarchische Baumstruktur eingefügt.

Die sich hieraus ergebende neue hierarchische Baumstruktur ist in Fig. 6c gezeigt.

Um die an der ersten Clienteinrichtung angezeigte Programmmaske mit den an der zweiten Clienteinrichtung C2 vorgenommenen Änderungen zu synchronisieren wird der geänderte Teil T, der nunmehr das Listenfeld L1 als Sohnknoten des Elements D2 umfasst, im Rahmen einer Aktualisierungsnachricht von der zweiten Clienteinrichtung C2 an die Servereinrichtung S übertragen und dort der eindeutigen Kennung der Programmmaske zugeordnet.

Die erste Clienteinrichtung C1 kann nun die Servereinrichtung abfragen, ob eine Änderung zu dieser Programmmaske vorliegt. Ist das der Fall, wird der Teil T der hierarchischen Baumstruktur, der nunmehr das Listenfeld L1 als Sohnknoten des Elements D2 umfasst, von der Servereinrichtung an die erste Clienteinrichtung C1 übertragen. Nachdem der Teil T der hierarchischen Baumstruktur an die erste Clienteinrichtung C1 übertragen worden ist, kann die erste Clienteinrichtung die hierarchische Baumstruktur, die die an der ersten Clienteinrichtung C1 angezeigte Programmmaske repräsentiert, aktualisieren, indem beispielsweise der Knoten D2 samt seiner Sohnelemente aus der hierarchischen Baumstruktur entfernt wird und der geänderte Teil T als Sohnknoten des Elements M in die hierarchische Baumstruktur eingefügt wird. Das Ergebnis ist dann die in Fig. 6c gezeigte hierarchische Baumstruktur.

Das Ändern der hierarchischen Baumstruktur an der ersten Clienteinrichtung C1 bewirkt, dass die dort angezeigte Programmmaske ebenfalls geändert wird und anstelle des Eingabefeldes T2 ein Listenfeld L1 angezeigt wird. Die an der ersten Clienteinrichtung C1 angezeigte Programmmaske ist damit synchron zu der an der zweiten Clienteinrichtung C2 angezeigten Programmmaske.

Mit Bezug auf Fig. 6 ist das Aktualisieren einer Programmmaske am Beispiel einer Internetseite gezeigt worden, die durch ein sogenannten Document-Object-Model (DOM) repräsentiert wird. Erfindungsgemäß können auch andere Repräsentationen einer Internetseite verwendet werden. Insbesondere können mit dem vorstehend beschriebenen Verfahren auch Eingabemasken eines Computerprogramms geändert werden und die Änderungen synchronisiert werden.

### Bezugszeichen:

- 10: Programmmaske (z.B. Internetseite)
- 11: Anzeigefeld für eindeutige Kennung der Programmmaske
- 12: Eingabefeld für Eingabe einer eindeutigen Kennung einer Programmmaske
- 13: Schaltfläche zur Bestätigung der Eingabe in das Eingabefeld 12
- S0 - S14: Verfahrensschritte
- C1: erste Clienteinrichtung
- C2: zweite Clienteinrichtung
- DB, DB1, DB2: Datenbank
- ID1: erste eindeutige Kennung
- ID2: zweite eindeutige Kennung
- S, S1, S2: Servereinrichtung (z.B. Webserver)
- T: der (die) zu aktualisierende(n) Teil(e) der Programmmaske
- U1: erster Benutzer (z.B. Kunde)
- U2: zweiter Benutzer (z.B. Supportmitarbeiter)

## Patentansprüche

1. Verfahren zur Synchronisation von Programmmasken in einem System umfassend zumindest eine Servereinrichtung (S) und zumindest eine erste Clienteinrichtung (C1) und eine zweite Clienteinrichtung (C2), wobei die Clienteinrichtungen (C1; C2) mit der zumindest einen Servereinrichtung (S) koppelbar sind, und wobei das Verfahren folgende Schritte umfasst:
- Entgegennehmen (S1) einer ersten Anfragenachricht von der ersten Clienteinrichtung (C1), wobei mit der ersten Anfragenachricht eine erste Programmmaske (10) angefordert wird;
- Ermitteln einer ersten eindeutigen Kennung (ID1) für die angeforderte erste Programmmaske (10), wobei die erste eindeutige Kennung (ID1) der angeforderten ersten Programmmaske (10) zugeordnet wird;
- Übertragen (S4) der angeforderten ersten Programmmaske (10) und der ersten eindeutigen Kennung (ID1) an die erste Clienteinrichtung (C1);
- Entgegennehmen (S6) einer zweiten Anfragenachricht von der zweiten Clienteinrichtung (C2), wobei die zweite Anfragenachricht zumindest die erste eindeutige Kennung (ID1) umfasst;
- Ermitteln (S7; S8) der ersten Programmmaske (10), die der entgegengenommenen ersten eindeutigen Kennung (ID1) zugeordnet ist; und
- Übertragen (S9) der ermittelten ersten Programmmaske (10) an die zweite Clienteinrichtung (C2),
**dadurch gekennzeichnet dass** die erste Programmmaske (10) durch eine hierarchische Baumstruktur (DOM) repräsentiert wird, wobei jeder Teil der ersten Programmmaske (10) durch einen Knoten in der Baumstruktur repräsentiert wird, wobei jeder Teil der ersten Programmmaske eine Anzahl von Teilen der ersten Programmmaske (10) umfassen kann, und wobei die Servereinrichtung (S)
- von der zweiten Clienteinrichtung (C2) eine Aktualisierungsnachricht entgegennimmt (S10), die Informationen darüber umfasst, welche Knoten der Baumstruktur der an die erste Clienteinrichtung (C1) übertragenen (S4) ersten Programmmaske (10) wie zu aktualisieren sind, und
- die empfangene Aktualisierungsnachricht der ersten eindeutigen Kennung (ID1) zuordnet.

2. Verfahren nach Anspruch 1, wobei das Ermitteln der ersten eindeutigen Kennung (ID1) umfasst:
- Erzeugen (S2) der ersten eindeutigen Kennung (ID1) für die angeforderte erste Programmmaske (10); und
- Speichern (S3) der ersten eindeutigen Kennung (ID1) in einer Speichereinrichtung (DB).

3. Verfahren nach Anspruch 1 oder 2, wobei beim Ermitteln (S7; S8) der ersten Programmmaske (10) die der entgegengenommenen ersten eindeutigen Kennung (ID1) in der Speichereinrichtung (DB) zugeordnete erste Programmmaske (10) in der Speichereinrichtung (DB) abgefragt (S7) wird und als Ergebnis der Abfrage Informationen über die erste Programmmaske (10) von der Speichereinrichtung (DB) entgegengenommen (S8) werden.

4. Verfahren nach einem der vorhergehenden Ansprüche, wobei die mit der zweiten Anfragenachricht von der zweiten Clienteinrichtung (C2) entgegengenommene erste eindeutige Kennung (ID1) von der ersten Clienteinrichtung (C1) an die zweite Clienteinrichtung (C2) übermittelt (S5) worden ist.

5. Verfahren nach einem der vorhergehenden Ansprüche, wobei die Schritte serverseitig ausgeführt werden.

6. Verfahren nach einem der vorhergehenden Ansprüche, wobei die Servereinrichtung die empfangene Aktualisierungsnachricht in der Speichereinrichtung (DB) speichert, wobei die Servereinrichtung (S) die Aktualisierungsnachricht zur Übertragung (S11) an die erste Clienteinrichtung (C1) bereitstellt, um an der ersten Clienteinrichtung (C1) eine Aktualisierung (S12) der übertragenen (S4; S9) ersten Programmmaske (10) gemäß der in der Aktualisierungsnachricht enthaltenen Informationen zu veranlassen.

7. Verfahren nach einem der vorhergehenden Ansprüche 2 bis 6, wobei die Servereinrichtung (S) bei Beendigung des Verfahrens ein Löschen der in der Speichereinrichtung (DB) gespeicherten ersten eindeutigen Kennung (ID1) veranlasst (S13).

8. Verfahren nach einem der vorhergehenden Ansprüche, wobei in einem ersten Schritt (S0) eine Sitzung (Session) für die erste Clienteinrichtung (C1) gestartet wird und in einem letzten Schritt (S 14) die Sitzung beendet wird.

9. Verfahren nach einem der vorhergehenden Ansprüche, wobei die erste Clienteinrichtung (C1) durch eine eindeutige Clientkennung identifizierbar ist und wobei die erste eindeutige Kennung (ID1) der Clientkennung zugeordnet wird und die Zuordnung in der Speichereinrichtung gespeichert wird, wobei die eindeutige Clientkennung eines aus IP-Adresse, MAC-Adresse, Browser-Kennung, Softwarelizenz-Nummer, Hardware-Seriennummer, eMail-Adresse, Telefonnummer, EAN-Code, und eindeutiges biometrisches Merkmal, umfasst.

10. Verfahren nach Anspruch 9, wobei in einem letzten Schritt (S14) die Sitzung beendet wird und die der Clientkennung zugeordnete eindeutige Kennung (ID1) in der Speichereinrichtung gelöscht wird.

11. Verfahren nach einem der vorhergehenden Ansprüche, wobei die erste Programmmaske (10) ein Anzeigefeld (11) zur Anzeige der ersten eindeutigen Kennung (ID1) und ein Eingabefeld (12) zur Eingabe der ersten eindeutigen Kennung (ID1) aufweist, und/oder wobei die erste eindeutige Kennung (ID1) eine Ziffernfolge ist, und/oder wobei die Programmmaske eine Eingabemaske eines Computerprogramms oder eine Internetseite ist.

12. Verfahren nach einem der vorgehenden Ansprüche, wobei die Servereinrichtung (S) Bestandteil der ersten Clienteinrichtung (C1) und/oder Bestandteil der zweiten Clienteinrichtung (C2) ist, insbesondere als auf der ersten Clienteinrichtung (C1) und/oder auf der zweiten Clienteinrichtung (C2) ausführbare Dienst.

13. Servereinrichtung (S), die mit zumindest einer ersten Clienteinrichtung (C1) und einer zweiten Clienteinrichtung (C2) koppelbar ist, wobei die Servereinrichtung angepasst ist ein Verfahren gemäß einem der vorhergehenden Ansprüche auszuführen.

14. Computerprogrammprodukt, das in den Speicher einer Servereinrichtung geladen werden kann und welches Programmabschnitte umfasst, mit denen die Schritte des Verfahrens gemäß einem der Ansprüche 1 bis 12 ausgeführt werden, wenn das Computerprogrammprodukt auf der Servereinrichtung zu Ausführung gebracht wird.

15. Signalfolge, insbesondere Computer lesbare und für die Übertragung in einem Kommunikationsnetzwerk geeignete Signalfolge, wobei die Signalfolge Daten repräsentiert, mit denen, wenn sie in einen Prozessor eines Computers, insbesondere eine Servereinrichtung (S) gemäß Anspruch 13, geladen werden, ein Verfahren gemäß einem der Ansprüche 1 bis 12 zur Ausführung bringbar ist.

## Claims

1. A method for synchronising program masks within a system comprising at least one server device (S) and at least one first client device (C1) and one second client device (C2), said client devices (C1; C2) being capable of connecting to said at least one server device (S) and said method including the steps of:
- receiving (S1) a first request message from the first client device (C1), said first request message communicating a request for a first program mask (10);
- determining a first unique identifier (ID1) for the requested first program mask (10), said first unique identifier (ID1) being assigned to the requested first program mask (10);
- transmitting (S4) the requested first program mask (10) and the first unique identifier (ID1) to the first client device (C1);
- receiving (S6) a second request message from the second client device (C2), said second request message including at least the first unique identifier (ID1);
- determining (S7; S8) the first program mask (10) which has been assigned to the received first unique identifier (ID1); and
- transmitting (S9) the determined first program mask (10) to the second client device (C2),
**characterised in that** the first program mask (10) is represented by a hierarchical tree structure (DOM), with each part of the first program mask (10) being represented by a node within the tree structure, with each part of the first program mask being capable of including a number of parts of the first program mask (10), and with the server device (S)
- receiving (S10) an update message from the second client device (C2) including information on which nodes of the tree structure of the first program mask (10) transmitted (S4) to the first client device (C1) are to be updated and on how these are to be updated, and
- assigning the received update message to the first unique identifier (ID1).

2. The method as claimed in claim 1, wherein determining the first unique identifier (ID1) comprises:
- generating (S2) the first unique identifier (ID1) for the requested first program mask (10); and
- storing (S3) the first unique identifier (ID1) in a storage device (DB).

3. The method as claimed in claim 1 or 2, wherein in determining (S7; S8) the first program mask (10), said first program mask (10) that has been assigned in the storage device (DB) to the received first unique identifier (ID1) is retrieved (S7) from the storage device (DB) and, as a result of this retrieval, information on the first program mask (10) is received (S8) from the storage device (DB).

4. The method as claimed in any of the preceding claims, wherein the first unique identifier (ID1) received from the second client device (C2) with the second request message has been transmitted (S5) to the second client device (C2) by the first client device (C1).

5. The method as claimed in any of the preceding claims, wherein said steps are executed on the server device.

6. The method as claimed in any of the preceding claims, wherein the server device stores the received update message in the storage device (DB), wherein the server device (S) provides the update message for transmission (S11) to the first client device (C1) so as to cause the transmitted (S4; S9) first program mask (10) to be updated (S12) on the first client device (C1) in accordance with the information included in the update message.

7. The method as claimed in any of the preceding claims 2 to 6, wherein upon termination of said method the server device (S) causes (S13) the first unique identifier (ID1) stored in the storage device (DB) to be deleted.

8. The method as claimed in any of the preceding claims, wherein as a first step (S0), a session is started for the first client device (C1) and, as a last step (S14), said session is terminated.

9. The method as claimed in any of the preceding claims, wherein the first client device (C1) is identifiable by means of a unique client identifier and wherein the first unique identifier (ID1) is assigned to the client identifier and said assignment is stored in the storage device, wherein the unique client identifier comprises one of: an IP address, a MAC address, a browser identifier, a software license number, a hardware serial number, an e-mail address, a telephone number, an EAN code, and a unique biometrical feature.

10. The method as claimed in claim 9, wherein as a last step (S14), the session is terminated and the unique identifier (ID1) assigned to the client identifier is deleted from the storage device.

11. The method as claimed in any of the preceding claims, wherein the first program mask (10) has a display field (11) for displaying the first unique identifier (ID1) and a data entry field (12) for entering the first unique identifier (ID1), and/or wherein the first unique identifier (ID1) is a digit sequence, and/or wherein the program mask is a data entry mask of a computer program or a page of an Internet site.

12. The method as claimed in any of the preceding claims, wherein the server device (S) is part of the first client device (C1) or part of the second client device (C2), in particular as a service executable on the first client device (C1) and/or on the second client device (C2).

13. A server device (S) capable of connecting to at least one first client device (C1) and one second client device (C2), wherein the server device is adapted to carry out a method according to any of the preceding claims.

14. A computer program product capable of being loaded into the memory of a server device and comprising program sections by means of which the steps of the method according to any one of claims 1 to 12 are performed as the computer program product is being executed on the server device.

15. A signal sequence, in particular a machine readable signal sequence suitable for being transmitted on a communications network, wherein the signal sequence represents data which, when loaded into a processor of a server device (S) according to claim 13, is capable of causing a method according to any one of claims 1 to 12 to be performed.

## Revendications

1. Procédé destiné à synchroniser des masques de programme dans un système comprenant au moins un dispositif serveur (S) et au moins un premier dispositif client (C1) et un deuxième dispositif client (C2), les dispositifs client (C1; C2) pouvant être couplés audit au moins un dispositif serveur (S) et le procédé comprenant les étapes suivantes:
- la réception (S1) d'un premier message de demande provenant du premier dispositif client (C1), le premier message de demande demandant un premier masque de programme (10);
- la détermination d'un premier identifiant univoque (ID1) pour le premier masque de programme (10) demandé, le premier identifiant univoque (ID1) étant attribué au premier masque de programme (10) demandé;
- la transmission (S4) du premier masque de programme (10) demandé et du premier identifiant univoque (ID1) au premier dispositif client (C1);
- la réception (S6) d'un deuxième message de demande provenant du deuxième dispositif client (C2), le deuxième message de demande comprenant au moins le premier identifiant univoque (ID1);
- la détermination (S7; S8) du premier masque de programme (10) qui est attribué au premier identifiant univoque (ID1) reçu; et
- la transmission (S9) du premier masque de programme (10) déterminé au deuxième dispositif client (C2),
**caractérisé en ce que** le premier masque de programme (10) est représenté par une structure arborescente hiérarchique (DOM), chaque partie du premier masque de programme (10) étant représentée par un noeud dans la structure arborescente, chaque partie du premier masque de programme pouvant comprendre un certain nombre de parties du premier masque de programme (10), et le dispositif serveur (S)
- recevant (S10) du deuxième dispositif client (C2) un message de mise à jour qui comprend des informations indiquant les noeuds de la structure arborescente du premier masque de programme (10) transmis (S4) au premier dispositif client (C1) qui sont à mettre à jour et les modifications à y apporter, et
- attribuant le message de mise à jour reçu au premier identifiant univoque (ID1).

2. Procédé selon la revendication 1 dans lequel la détermination du premier identifiant univoque (ID1) comprend:
- la génération (S2) du premier identifiant univoque (ID1) pour le premier masque de programme (10) demandé; et
- le stockage (S3) du premier identifiant univoque (ID1) dans un dispositif mémoire (DB).

3. Procédé selon la revendication 1 ou 2 dans lequel, lors de la détermination (S7; S8) du premier masque de programme (10), le premier masque de programme (10) attribué, dans le dispositif mémoire (DB), au premier identifiant univoque (ID1) reçu est interrogé (S7) dans le dispositif mémoire (DB) et, suite à ladite interrogation, des informations concernant le premier masque de programme (10) provenant du dispositif mémoire (DB) sont reçues (S8).

4. Procédé selon l'une quelconque des revendications précédentes dans lequel le premier identifiant univoque (ID1) reçu, ensemble avec le deuxième message de demande, en provenance du deuxième dispositif client (C2) a été transmis (S5) par le premier dispositif client (C1) au deuxième dispositif client (C2).

5. Procédé selon l'une quelconque des revendications précédentes dans lequel lesdites étapes sont exécutées côté serveur.

6. Procédé selon l'une quelconque des revendications précédentes dans lequel le dispositif serveur stocke le message de mise à jour reçu dans le dispositif mémoire (DB), le dispositif serveur (S) préparant le message de mise à jour en vue de sa transmission (S11) au premier dispositif client (C1) afin qu'une mise à jour (S12) du premier masque de programme (10) transmis (S4; S9) soit effectuée au niveau du premier dispositif client (C1) selon les informations contenues dans le message de mise à jour.

7. Procédé selon l'une quelconque des revendications précédentes 2 à 6 dans lequel le dispositif serveur (S) fait en sorte que (S13), le procédé terminé, le premier identifiant univoque (ID1) stocké dans le dispositif mémoire (DB) soit effacé.

8. Procédé selon l'une quelconque des revendications précédentes dans lequel, dans une première étape (S0), une séance (session) est lancée pour le premier dispositif client (C1) et, dans une dernière étape (S14), ladite séance est quittée.

9. Procédé selon l'une quelconque des revendications précédentes dans lequel le premier dispositif client (C1) est identifiable au moyen d'un identifiant client univoque et dans lequel le premier identifiant univoque (ID1) est attribué à l'identifiant client et ladite attribution est stockée dans le dispositif mémoire, l'identifiant client univoque comprenant l'un des éléments suivants: adresse IP, adresse MAC, identifiant navigateur, numéro de licence du logiciel, numéro de série du matériel, adresse de courriel, numéro de téléphone, code EAN et caractéristique biométrique univoque.

10. Procédé selon la revendication 9 dans lequel, dans une dernière étape (S14), la séance est quittée et l'identifiant univoque (ID1) attribué à l'identifiant client est effacé dans le dispositif mémoire.

11. Procédé selon l'une quelconque des revendications précédentes dans lequel le premier masque de programme (10) présente un champ d'affichage (11) pour l'affichage du premier identifiant univoque (ID1) et un champ d'entrée (12) pour l'entrée du premier identifiant univoque (ID1) et/ou dans lequel le premier identifiant univoque (ID1) est une suite de chiffres et/ou dans lequel le masque de programme est un masque de saisie d'un programme d'ordinateur ou une page d'un site Internet.

12. Procédé selon l'une quelconque des revendications précédentes dans lequel le dispositif serveur (S) fait partie du premier dispositif client (C1) et/ou fait partie du deuxième dispositif client (C2), en particulier en tant que service exécutable sur le premier dispositif client (C1) et/ou sur le deuxième dispositif client (C2).

13. Dispositif serveur (S) qui peut être couplé à au moins un premier dispositif client (C1) et un deuxième dispositif client (C2), dans lequel ledit dispositif serveur est conçu pour exécuter un procédé selon l'une quelconque des revendications précédentes.

14. Produit programme d'ordinateur qui peut être chargé dans la mémoire d'un dispositif serveur et qui comprend des sections de programme grâce auxquelles les étapes du procédé selon l'une quelconque des revendications 1 à 12 sont exécutées lorsque l'exécution du produit programme d'ordinateur est lancée sur le dispositif serveur.

15. Suite de signaux, en particulier suite de signaux lisible par ordinateur et conçue pour la transmission dans un réseau de communication, dans laquelle ladite suite de signaux représente des données qui, chargées dans un processeur d'un dispositif serveur (S) selon la revendication 13, permettent de lancer l'exécution d'un procédé selon l'une quelconque des revendications 1 à 12.
